# EUROPÄISCHE PATENTANMELDUNG

(11) **EP 4 502 428 A1**
(43) Veröffentlichungstag der Anmeldung: **05.02.2025**
(21) Anmeldenummer: 24190792.2
(22) Anmeldetag: 25.07.2024
(51) Int. Cl.: F16H 61/32

(54) **VERFAHREN ZUM STEUERN EINES SERVOMOTORS EINER SCHALTWALZE EINES MEHRGANGGETRIEBES UND COMPUTEREINRICHTUNG**

(30) Priorität: 02.08.2023 DE 102023207386
(71) Anmelder: ZF Friedrichshafen AG, 88046 Friedrichshafen (DE)
(72) Erfinder: Wallner, Markus, 88046 Friedrichshafen (DE); Schraff, Uwe, 88677 Markdorf (DE); Jungaberle, Alexander, 88281 Schlier (DE); Schenk, Manfred, 88046 Friedrichshafen (DE)
(74) Vertreter: ZF Friedrichshafen AG

(57) **Zusammenfassung**

Es wird ein Verfahren zum Steuern eines Servomotors (8) einer Schaltwalze eines Mehrganggetriebes beschrieben. Das Verfahren weist ein Durchführen (S1) eines Schaltvorgangs im Mehrganggetriebe mit der Schaltwalze auf. Ferner weist das Verfahren ein Messen (S2) einer Zeit, welche für das Durchführen (S1) des Schaltvorgangs notwendig ist, auf. Sodann erfolgt ein Vergleichen (S3) der gemessenen Zeit mit einer vorbestimmten Zeit und ein Bestimmen (S4) eines Steuerparameters des Servomotors (8) in Abhängigkeit von dem Vergleich für ein zeitlich nachfolgendes Durchführen (S1) eines Schaltvorgangs mit dem bestimmten Steuerparameter. Ferner wird eine Computereinrichtung (6) beschrieben, welche eingerichtet ist, ein solches Verfahren auszuführen. Ferner wird eine Antriebseinrichtung (4) beschrieben, welche einen Servomotor (8) und eine solche Computereinrichtung (6) aufweist, sowie ein Kraftfahrzeug (2) mit einer solchen Antriebseinrichtung (4).

## Beschreibung

Die vorliegende Erfindung bezieht sich auf ein Verfahren zum Steuern eines Servomotors einer Schaltwalze eines Mehrganggetriebes. Ferner bezieht sich die vorliegende Erfindung auf eine Computereinrichtung zum Ausführen eines solchen Verfahrens. Ferner bezieht sich die vorliegende Erfindung auf eine Antriebseinrichtung mit einem Servomotor und einer solchen Computereinrichtung zum Steuern des Servomotors, sowie auf ein Kraftfahrzeug mit einer solchen Antriebseinrichtung.

Mehrganggetriebe, beispielsweise von Zweirädern, können mittels Schaltwalzen geschaltet werden. Dafür ist ein Drehen der Schaltwalze notwendig. Ein Servomotor kann dieses Drehen der Schaltwalze ausführen. Dabei kann über eine bestimmte Verdrehung um einen bestimmten Winkel der Schaltwalze das Mehrganggetriebe geschaltet werden. Um einen reibungslosen Betrieb des Mehrganggetriebes und reibungslose Schaltvorgänge gewährleisten zu können, muss dafür die Schaltwalze mit dem Servomotor sehr exakt montiert sein, da eine Verdrehung der Schaltwalze einem geänderten Zustand des Mehrganggetriebes entspricht. Ist die Schaltwalze nicht exakt bezüglich einer definierten Montageposition, einer Idealposition, montiert, so kann es vorkommen, dass Schaltvorgänge nicht oder zumindest nicht optimal ausgeführt werden. Damit muss bei der Montage von Servomotoren und Schaltwalzen mit einem hohen Aufwand dafür gesorgt werden, dass eine Winkelposition der Schaltwalze korrekt ist, um optimale Schaltvorgänge des Mehrganggetriebes gewährleisten zu können.

Die vorliegende Erfindung betrifft in einem ersten Aspekt ein Verfahren zum Steuern eines Servomotors einer Schaltwalze eines Mehrganggetriebes. Das Verfahren kann ein Computer-implementiertes Verfahren sein. Das Verfahren kann ein Verfahren zur Adaption des Servomotors sein. Schritte des Verfahrens können durch eine Computereinrichtung ausgeführt werden. Der Servomotor kann ein Schaltservomotor sein. Zumindest eines von einer Drehgeschwindigkeit, einer Beschleunigung und einer Winkelposition des Servomotors können gesteuert werden. Der Servomotor kann einen Sensor zum Bestimmen von zumindest einem von Drehgeschwindigkeit, Beschleunigung und Winkelposition des Servomotors aufweisen. Das Mehrganggetriebe kann Teil eines Zweirads, beispielsweise eines Motorrads oder eines muskelkraftbetriebenen Zweirads, wie eines Fahrrads, beispielsweise eines E-Bikes, sein. Im Fall eines muskelkraftbetriebenen Fahrrads kann das Mehrganggetriebe im Tretlager des Fahrrads angeordnet sein. Die Schaltwalze kann eingerichtet sein, über ein Drehen der Schaltwalze Klinken des Mehrganggetriebes zu betätigen, und damit das Mehrganggetriebe zwischen unterschiedlichen Gängen zu schalten. In unterschiedlichen Gängen kann das Mehrganggetriebe jeweils unterschiedliche Übersetzungen bereitstellen. Übersetzungen können beispielsweise zwischen einer Kurbel und einem Abtriebsrad des Fahrrads bereitgestellt werden.

Das Verfahren weist ein Durchführen eines Schaltvorgangs im Mehrganggetriebe mit der Schaltwalze auf. Beim Durchführen des Schaltvorgangs kann von einem ersten Gang in einen zweiten Gang des Mehrganggetriebes geschaltet werden. Dabei kann der hier definierte erste Gang ein beliebiger Gang des Mehrganggetriebes sein, welcher vor dem Durchführen des Schaltvorgangs eingelegt ist. Der hier definierte zweite Gang kann ein beliebiger, anderer Gang des Mehrganggetriebes sein, welcher nach dem Durchführen des Schaltvorgangs im Mehrganggetriebe eingelegt ist. So kann beispielsweise der hier definierte erste Gang ein höherer oder niedriger Gang sein als der hier definierte zweite Gang. Die so definierten Gänge können dabei aufeinanderfolgende Gänge sein, wobei das Mehrganggetriebe ein sequenzielles Mehrganggetriebe sein kann. So kann der hier definierte erste Gang beispielsweise ein vierter Gang und der hier definierte zweite Gang kann beispielsweise ein dritter oder fünfter Gang sein. Beim Durchführen des Schaltvorgangs können Elemente des Mehrganggetriebes voneinander getrennt werden und andere Elemente des Mehrganggetriebes miteinander in Eingriff gebracht werden, beispielsweise Klinken. Dies kann durch Drehen der Schaltwalze erfolgen. Dazu kann der Servomotor im Rahmen des Durchführens des Schaltvorgangs mit einem Steuerparameter angesteuert werden. Vor dem Durchführen des Schaltvorgangs kann im Mehrganggetriebe eine erste Übersetzung vorliegen, und nach dem Durchführen des Schaltvorgangs kann im Mehrganggetriebe eine zweite, andere Übersetzung vorliegen.

Ferner erfolgt ein Messen einer Zeit, welche für das Durchführen des Schaltvorgangs notwendig ist. Das Messen der Zeit kann während des Durchführens des Schaltvorgangs erfolgen. Dabei kann das Messen der Zeit von einem Startzeitpunkt zu einem Endzeitpunkt erfolgen. Der Startzeitpunkt kann dadurch definiert sein, dass das Durchführen des Schaltvorgangs beginnt. Der Endzeitpunkt kann dadurch definiert sein, dass das Durchführen des Schaltvorgangs endet. Somit kann die gemessene Zeit genau die Zeit zum Durchführen des Schaltvorgangs definieren. Alternativ oder zusätzlich zur Zeit kann ein Winkel gemessen werden, welche vom Servomotor und damit von der Schaltwalze während des Durchführens des Schaltvorgangs überstrichen wird.

Ferner erfolgt ein Vergleichen der gemessenen Zeit mit einer vorbestimmten Zeit. Beim Vergleichen kann bestimmt werden, ob die gemessene Zeit gleich, kürzer oder länger als die vorbestimmte Zeit ist. Beim Vergleichen kann bestimmt werden, ob die gemessene Zeit um einen bestimmten relativen oder absoluten Wert von der vorbestimmten Zeit abweicht. Dabei kann beispielsweise beim Vergleichen bestimmt werden, ob die gemessene Zeit innerhalb eines Toleranzbereichs von der vorbestimmten Zeit abweicht. Die vorbestimmte Zeit kann dabei definieren, wie lange das Durchführen eines Schaltvorgangs unter Idealbedingungen dauert. Indirekt kann über die vorbestimmte Zeit auch ein vorbestimmter Winkel definiert werden, welcher zum Durchführen des Schaltvorgangs im Mehrganggetriebe von einem ersten zu einem zweiten Gang vom Servomotor, und damit von der Schaltwalze, überstrichen werden muss. Alternativ oder zusätzlich kann unabhängig von einer vorbestimmten Zeit ein vorbestimmter Winkel definiert sein. Falls statt der vorbestimmten Zeit ein vorbestimmter Winkel definiert ist, kann über einen Zusammenhang die optimale Zeit zum Durchführen des Schaltvorgangs bestimmt werden. Es kann ein Toleranzbereich des Winkels vorbestimmt sein. Somit kann, falls ein vorbestimmter Winkel vorliegt, alternativ oder zusätzlich zum Vergleichen der gemessenen Zeit mit der vorbestimmten Zeit ein Vergleichen eines gemessenen Winkels mit dem vorbestimmten Winkel erfolgen.

Ferner erfolgt ein Bestimmen eines Steuerparameters des Servomotors in Abhängigkeit von dem Vergleich für ein zeitlich nachfolgendes Durchführen eines Schaltvorgangs mit dem bestimmten Steuerparameter. Dabei kann genau ein Steuerparameter des Servomotors bestimmt werden, alternativ können mehrere Steuerparameter des Servomotors bestimmt werden. Über den bestimmten Steuerparameter kann zumindest eine Eigenschaft des Servomotors gesteuert werden. Das Bestimmen des Steuerparameters kann erfolgen, wenn die gemessene Zeit von der vorbestimmten Zeit um mehr als den Toleranzbereichs abweicht. Alternativ kann der Schritt des Bestimmens stets erfolgen und im Schritt des Bestimmens kann der Steuerparameter in Abhängigkeit von dem Vergleich bestimmt werden. Beispielsweise kann abhängig davon, ob die gemessene Zeit innerhalb oder außerhalb des Toleranzbereichs von der vorbestimmten Zeit abweicht, das Bestimmen des Steuerparameters erfolgen. Der bestimmte Steuerparameter kann für das zeitlich nachfolgende Durchführen zwischengespeichert werden, beispielsweise auf einer Speichereinrichtung. Das Verfahren kann auch ferner den Schritt des zeitlich nachfolgenden Durchführens des Schaltvorgangs mit dem bestimmten Steuerparameter aufweisen, wobei beispielsweise der bestimmte Steuerparameter von der Speichereinrichtung ausgelesen werden kann. Somit kann ein zeitlich nachfolgendes Durchführen eines Schaltvorgangs mit anderen Steuerparametern des Servomotors erfolgen als das oben beschriebene und zeitlich vorangehende Durchführen. Dabei kann einmalig oder mehrfach das Durchführen eines Schaltvorgangs mit dem bestimmten Steuerparameter erfolgen. Somit kann der Servomotor und damit die Schaltwalze zum Durchführen eines zeitlich nachfolgenden Schaltvorgangs adaptiert werden.

Ein solches Verfahren kann eine Lernfunktion, beispielsweise eine Software-Lernfunktion, zum Steuern des Servomotors bereitstellen. Dabei kann mit dem Verfahren indirekt eine korrekte oder nicht korrekte Lage des Servomotors und der Schaltwalze bestimmt werden, und es kann bestimmt werden, inwieweit die Schaltwalze und der Servomotor von einer Idealposition verdreht ist. Das Bestimmen der Lage von Servomotor und Schaltwalze kann über ein Messen der Zeit zum Durchführen eines Schaltvorgangs erfolgen. Beispielsweise kann bei einer Montage die Schaltwalze und der Servomotor nicht ideal ausgerichtet sein und somit nicht in der Idealposition montiert sein. Mit dem vorliegenden Verfahren kann jedoch eine Adaptionsfunktion ausgeführt werden, wobei durch den Vergleich der gemessenen Zeit und der vorbestimmten Zeit ein exaktes Durchführen nachfolgender Schaltvorgänge gewährleistet werden kann.

Gemäß einer weiteren Ausführungsform kann das Verfahren dadurch gekennzeichnet sein, dass ferner ein Bestimmen einer Bewegung des Servomotors erfolgen kann. Das Bestimmen der Bewegung des Servomotors kann über eine Messen der Bewegung mit einem Sensor des Servomotors erfolgen. Dabei kann bestimmt werden, ob sich der Servomotor bewegt, also ob sich der Servomotor beispielsweise dreht und seine Winkelposition ändert. Alternativ oder zusätzlich kann bestimmt werden, um welchen Winkel der Servomotor gedreht wird. Dabei können beispielsweise Datentupel bestimmt werden, bestehend aus einem Zeitpunkt und einer Winkelposition des Servomotors. Die Datentupel können Informationen zu einer bestimmten Winkelposition für einen bestimmten Zeitpunkt umfassen. Basierend auf den Datentupeln kann bestimmt werden, ob sich der Servomotor dreht. Alternativ oder zusätzlich kann basierend auf den Datentupeln bestimmt werden, um welchen Winkel sich der Servomotor dreht. Ferner kann das Messen der Zeit für das Durchführen des Schaltvorgangs starten, wenn die bestimmte Bewegung des Servomotors zum Durchführen des Schaltvorgangs startet. Dabei kann das Messen der Zeit starten, wenn zuvor bestimmt worden ist, dass sich der Servomotor bewegt und beispielsweise gleichzeitig gegeben ist, dass die Bewegung des Servomotors aufgrund eines Steuerparameters des Servomotors hervorgerufen wird. Beispielsweise kann im Schritt des Bestimmens der Bewegung des Servomotors ebenfalls bestimmt werden, ob der Servomotor aktiv bestromt wird oder nicht. Es kann also unterschieden werden, ob der Servomotor aktiv oder passiv gedreht wird. Damit kann das Messen beispielsweise nur dann starten, wenn der Servomotor aktiv gedreht wird.

Somit kann in einfacher Art und Weise definiert werden, wann das Messen der Zeit zum Durchführen des Schaltvorgangs starten soll. Dies soll dann geschehen, wenn der Servomotor beginnt, das Durchführen des Schaltvorganges auszuführen. Dies kann besonders einfach beispielsweise über einen Sensor und die Winkelposition des Servomotors bestimmt werden.

Gemäß einer weiteren Ausführungsform kann das Verfahren dadurch gekennzeichnet sein, dass ferner ein Bestimmen eines Drehmoments erfolgen kann. Das Bestimmen kann ein Messen umfassen, beispielsweise mit einem Drehmomentsensor. Der Drehmomentsensor kann im Mehrganggetriebe angeordnet sein. Es kann ein Bestimmen des Drehmoments im und alternativ oder zusätzlich am Mehrganggetriebe erfolgen. So kann ein Drehmoment an einem Element des Mehrganggetriebes erfolgen. So kann beispielsweise ein Drehmoment an einer Eingangswelle, an einer Ausgangswelle oder an einem im Drehmomentfluss zwischen der Eingangswelle und der Ausgangswelle befindlichen Element des Mehrganggetriebes bestimmt und gemessen werden. Das Messen der Zeit für das Durchführen des Schaltvorgangs kann enden, wenn ein vorbestimmtes Drehmoment bestimmt wird. Das vorbestimmte Drehmoment kann dabei vordefiniert sein. Beispielsweise kann bestimmt werden, dass das Drehmoment innerhalb eines gewissen Toleranzbereichs, beispielsweise eines vorbestimmten Toleranzbereichs, um das vorbestimmte Drehmoment liegt. Wenn das bestimmte Drehmoment in dem Toleranzbereich liegt, kann das Messen der Zeit enden. Das vorbestimmte Drehmoment kann dabei ein absolutes Drehmoment an einem Element oder eine relative Veränderung des Drehmoments an dem Element zu einem zeitlich davor gemessenen Drehmoment am selben Element sein. Das vorbestimmte Drehmoment kann dabei abhängig sein von einem Gang, welcher nach dem Durchführen des Schaltvorgangs im Mehrganggetriebe eingelegt werden soll. Alternativ oder zusätzlich kann das vorbestimmte Drehmoment abhängig von einem Gang sein, welcher vor dem Durchführen des Schaltvorgangs im Mehrganggetriebe eingelegt ist. So kann beispielsweise durch das Durchführen des Schaltvorgangs ein Drehmoment an einer Ausgangswelle des Mehrganggetriebes geändert werden. Vor dem Durchführen des Schaltvorgangs kann beispielsweise schon vorbestimmt sein, welches Drehmoment nach dem Durchführen des Schaltvorgangs zu erwarten ist. Das Messen kann dann enden, wenn das vorbestimmte Drehmoment erreicht ist, beispielsweise innerhalb des Toleranzbereichs.

Somit kann aufgrund einer einfachen physikalischen Messung des Drehmoments einfach, sicher und exakt bestimmt werden, ob der Schaltvorgang erfolgreich durchgeführt worden ist oder nicht. Damit kann die Zeit für das Durchführen des Schaltvorgangs exakt bestimmt und gemessen werden.

Gemäß einer weiteren Ausführungsform kann das Verfahren dadurch gekennzeichnet sein, dass ein Durchführen mehrerer Schaltvorgänge erfolgen kann, beispielsweise nacheinander. Ferner kann ein Messen einer Zeit für das Durchführen als einzelne Schaltvorgänge erfolgen. Beispielsweise kann das Messen nacheinander erfolgen, und jeweils eine Zeit für das Durchführen eines einzelnen Schaltvorgangs kann gemessen werden und in einer beispielsweise als Zwischenspeicher fungierenden Speichereinrichtung gespeichert werden. Ferner kann ein Vergleichen der gemessenen Zeit mit vorbestimmten Zeiten erfolgen. Beispielsweise können mehrere Schritte des Vergleichens erfolgen, etwa gleichzeitig oder nacheinander. Darüber hinaus können die in der als Zwischenspeicher fungierenden Speichereinrichtung gespeicherten Zeiten zum Durchführen der einzelnen Schaltvorgänge verwendet werden. So kann für das Durchführen eines ersten Schaltvorgangs zwischen beispielsweise einem ersten und einem zweiten Gang des Mehrganggetriebes die dafür gemessene Zeit mit einer ersten vorbestimmten Zeit verglichen werden. Eine zweite gemessene Zeit für das Durchführen eines zweiten Schaltvorgangs, beispielsweise zwischen zweitem und drittem Gang des Mehrganggetriebes, kann im Schritt des Vergleichens mit einer zweiten vorbestimmten Zeit verglichen werden. Die vorbestimmten Zeiten können unterschiedlich oder gleich sein. Dabei können die vorbestimmten Zeiten für den jeweiligen Schaltvorgang vorbestimmte Zeiten sein, also gangspezifisch. Ergebnisse des Vergleichens bzw. mehrerer Schritte des Vergleichens können in der als Zwischenspeicher fungierenden Speichereinrichtung gespeichert werden. Ferner kann das Bestimmen des Steuerparameters in Abhängigkeit von mehreren Vergleichen erfolgen. So kann beispielsweise ein Vergleichen der gemessenen Zeit mit der vorbestimmten Zeit für den ersten und für den zweiten Schaltvorgang erfolgt sein. Der Steuerparameter für den Servomotor kann dann in Abhängigkeit von beiden Vergleichen erfolgen. Dabei kann der Steuerparameter unterschiedlich bestimmt werden zu dem Fall, in welchem das Bestimmen des Steuerparameters lediglich in Abhängigkeit eines Schrittes des Vergleichens eines einzigen Schaltvorgangs erfolgt.

Somit kann die Zeit zum Durchführen eines Schaltvorgangs zwischen unterschiedlichen Gängen des Mehrganggetriebes gemessen und mit jeweils vorbestimmten Zeiten verglichen werden. Das Bestimmen des Steuerparameters kann dann abhängig von den unterschiedlichen Reaktionen des Mehrganggetriebes für die unterschiedlichen Schaltvorgänge erfolgen. Somit kann ein systematischer mechanischer und alternativ oder zusätzlich elektrischer Drift des Servomotors und der Schaltwalze erkannt werden, auch über mehrere Schaltvorgänge zwischen mehr als zwei unterschiedlichen Gängen des Mehrganggetriebes. Das Bestimmen des Steuerparameters kann damit optimiert werden, so dass auch das Durchführen unterschiedlicher Schaltvorgänge zwischen mehr als zwei Gängen des Mehrganggetriebes mit einem adaptierten Servomotor und einer adaptierten Schaltwalze erfolgen kann.

Gemäß einer weiteren Ausführungsform kann das Verfahren dadurch gekennzeichnet sein, dass beim Bestimmen des Steuerparameters ein Bestimmen eines Offsets für den Servomotor erfolgen kann. Ein Offset kann dabei einen bestimmten Winkel definieren, um den der Servomotor und damit die Schaltwalze verdreht zu einer bestimmten Position, beispielsweise zu einer Nullstellungsposition oder Idealposition, ist. Der Offset kann dabei unabhängig von einem Gang bzw. von einem Schaltvorgang zwischen zwei Gängen bestimmt werden. Damit kann der Offset für alle Gänge des Mehrganggetriebes bestimmt werden. Alternativ oder zusätzlich kann der Offset gangspezifisch bestimmt werden, sodass für unterschiedliche Schaltvorgänge unterschiedliche Werte des Offsets bestimmt und verwendet werden.

Mit einem so bestimmten Offset kann der Servomotor und damit die Schaltwalze so gesteuert werden, dass die Schaltwalze und damit die Klinken optimal ausgerichtet werden können. Damit kann eine harmonischere Schaltung und eine bessere Qualität von Schaltvorgängen bereitgestellt werden. Mit einem solchen Offset kann eine verdrehte Schaltwalze so gesteuert werden, dass Plateaus, welche zum Schalten der Klinken des Mehrganggetriebes verwendet werden, optimal zu den Klinken ausgerichtet werden können, so dass eine optimale Schaltqualität bereitgestellt werden kann.

Gemäß einer weiteren Ausführungsform kann das Verfahren dadurch gekennzeichnet sein, dass beim Bestimmen des Steuerparameters ein Bestimmen einer Geschwindigkeit für den Servomotor erfolgen kann. Die Geschwindigkeit für den Servomotor kann dabei eine Winkelgeschwindigkeit des Servomotors und damit der Schaltwalze sein. Die Geschwindigkeit kann eine Drehgeschwindigkeit oder eine Schalltwalzengeschwindigkeit der Schaltwalze sein. Beispielsweise kann abhängig von dem Vergleichen für einen ersten Schaltvorgang bestimmt werden, dass eine erste Geschwindigkeit für den Servomotor bestimmt wird. Abhängig vom Vergleichen kann für einen zweiten, weiteren Schaltvorgang bestimmt werden, dass eine zweite, andere Geschwindigkeit für den Servomotor bestimmt werden kann. So kann für unterschiedliche Schaltvorgänge bestimmt werden, dass unterschiedliche Geschwindigkeiten des Servomotors bestimmt und dann auch beim Durchführen eines zeitlich nachfolgenden Schaltvorgangs zum Steuern des Servomotors verwendet werden können. Alternativ kann gangunspezifisch eine Geschwindigkeit bestimmt werden.

Durch ein Bestimmen einer Geschwindigkeit und damit durch ein Anpassen der Geschwindigkeit an bestimmte Schaltvorgänge kann die Schaltung harmonisiert werden. Durch das Harmonisieren der Schaltung und der Schaltvorgänge kann erreicht werden, dass sich verschiedene Schaltvorgänge zwischen verschiedenen Gängen des Mehrganggetriebes für den Fahrer gleich anfühlen. Normalerweise ist die Drehgeschwindigkeit der Schaltwalze im Mehrganggetriebe festgelegt und einheitlich für unterschiedliche Gangwechsel. Es kann jedoch in manchen Situationen vorteilhaft sein, einen bestimmten Schaltvorgang schneller durchzuführen als einen anderen Schaltvorgang. Dies kann dann beispielsweise abhängig von dem Vergleichen der gemessenen und der vorbestimmten Zeit erfolgen. So kann beispielsweise für einen bestimmten Schaltvorgang die Geschwindigkeit des Servomotors auch geboostet und in einem Geschwindigkeitsbereich außerhalb eines normalen dauerhaften Verwendungsbereichs der Servomotors bestimmt und zum Steuern des Servomotors verwendet werden.

Gemäß einer weiteren Ausführungsform kann das Verfahren dadurch gekennzeichnet sein, dass beim Bestimmen des Steuerparameters ein Bestimmen eines Eingriffs zum Bremsen eines Elements des Servomotors oder des Mehrganggetriebes erfolgen kann. Es kann ein Eingriff zum Bremsen eines Elements des Servomotors, des Mehrganggetriebes oder des Servomotors und des Mehrganggetriebes bestimmt werden. Ein Element des Servomotors kann beispielsweise ein Rotor des Servomotors sein, wobei beim Bremsen des Rotors dieser gegenüber einem Stator des Servomotors gebremst werden kann. Alternativ oder zusätzlich kann ein Bremsen eines Elements des Mehrganggetriebes erfolgen. Dabei kann beispielsweise die Eingangswelle, die Ausgangswelle, oder ein Element im Drehmomentfluss zwischen Eingangs- und Ausgangswelle des Mehrganggetriebes als Element gebremst werden, beispielsweise über eine mechanische Verbindung zum Servomotor. Ein Eingriff zum Bremsen kann dabei beispielsweise über einen Eingriff im Servomotor erfolgen, beispielsweise über eine bestimmte Bestromung des Servomotors. Der Servomotor kann mit der Eingangswelle des Mehrganggetriebes verbunden sein. Beim Bestimmen des Eingriffs kann bestimmt werden, ob ein Eingriff zum Bremsen erfolgen soll und falls ein Eingriff zum Bremsen erfolgen soll, mit welcher Intensität der Eingriff erfolgen soll, also beispielsweise mit welcher Stromstärke. Somit kann qualitativ und quantitativ bestimmt werden, wie der Eingriff zum Bremsen erfolgen soll. Das Bestimmen eines Offsets des Servomotors, das Bestimmen der Geschwindigkeit des Servomotors und das Bestimmen des Eingriffs zum Bremsen können dabei in beliebiger Kombination erfolgen. Es kann jeweils auch nur ein einzelner dieser Schritte des Bestimmens erfolgen. Wenn zumindest zwei dieser Schritte des Bestimmens gleichzeitig erfolgen, um den Servomotor zu steuern und einen Steuerparameter für den Servomotor zu bestimmen, können diese Schritte des Bestimmens aufeinander angepasst werden. So kann ein Bestimmen eines Offsets beispielsweise an ein Bestimmen eines Eingriffs zum Bremsen eines Elements angepasst werden.

Durch das Bremsen eines Elements des Servomotors oder des Mehrganggetriebes kann ein Schaltvorgang noch schneller erfolgen, wenn beispielsweise Elemente des Mehrganggetriebes schneller eingreifen und damit ein Schaltvorgang durchgeführt wird. Damit kann der Drehmomentfluss nach dem Durchführen des Schaltvorgangs schneller hergestellt werden. Durch Kombination verschiedener Schritte des Bestimmens des Offsets, der Geschwindigkeit des Servomotors und eines Eingriffs zum Bremsen kann ferner erreicht werden, dass der Schaltvorgang schneller und präziser durchgeführt werden kann. Ferner kann damit erreicht werden, dass ein von einem Nutzer des Mehrganggetriebes gewünschtes Schaltverhalten erreicht wird.

Gemäß einer weiteren Ausführungsform kann das Verfahren dadurch gekennzeichnet sein, dass ein Messen eines Winkels des Servomotors beim Durchführen des Schaltvorgangs erfolgen kann. Das Messen des Winkels kann dabei mit einem Sensor des Servomotors zum Messen eines Drehwinkels des Servomotors und der Schaltwalze erfolgen. Dabei kann ein absoluter Winkel des Servomotors bezüglich einer Nullposition gemessen werden. Alternativ oder zusätzlich kann ein relativer Winkel gemessen werden. Ein relativer Winkel kann dabei beispielsweise zwei Winkelpositionen des Servomotors zu zwei unterschiedlichen Zeitpunkten berücksichtigen und den relativen Abstand dazwischen angeben. Das Bestimmen des Steuerparameters des Servomotors kann in Abhängigkeit des gemessenen Winkels erfolgen. Beispielsweise kann das Bestimmen des Steuerparameters zusätzlich in Abhängigkeit eines vorbestimmen Winkels erfolgen. Dabei kann der vorbestimmte Winkel mit dem gemessenen Winkel verglichen werden. In Abhängigkeit dieses Vergleichs kann das Bestimmen des Steuerparameters des Servomotors erfolgen. Ein vorbestimmter Winkel kann beispielsweise für ein Durchführen eines bestimmten Schaltvorgangs zwischen zwei bestimmten Gängen definiert sein. Für unterschiedliche Schaltvorgänge können gleiche oder unterschiedliche Winkel vorbestimmt sein.

Somit kann mit dem Verfahren abgesichert werden, dass nach einer bestimmten Zeit auch wirklich ein bestimmter Winkel von der Schaltwalze und dem Servomotor überstrichen worden ist, und die Schaltwalze wirklich zum Durchführen des Schaltvorgangs gedreht worden ist. Dabei kann gangspezifisch oder alternativ gangunspezifisch der bestimmte Winkel vorgegeben werden, welcher ein erfolgreiches Durchführen des Schaltvorgangs definiert.

Gemäß einer weiteren Ausführungsform kann das Verfahren dadurch gekennzeichnet sein, dass das Verfahren im Rahmen eines erstmaligen Betriebs der Schaltwalze nach einer Montage der Schaltwalze in dem Mehrganggetriebe durchgeführt werden kann. Dabei kann das Verfahren zumindest einmalig nach der Montage im Rahmen des erstmaligen Betriebs oder alternativ mehrfach im Rahmen eines erstmaligen Betriebs nach der Montage durchgeführt werden. So kann beispielsweise die Schaltwalze in dem Mehrganggetriebe zunächst montiert werden, beispielsweise zusammen mit dem Servomotor. Zeitlich darauffolgend kann das Verfahren im Rahmen eines erstmaligen Betriebs ausgeführt werden. Dies kann beispielsweise noch im Rahmen der allgemeinen Montage des Zweirads, welches das Mehrganggetriebe und die Schaltwalze mit dem Servomotor aufweisen kann, erfolgen.

Dabei kann das Montieren des Mehrganggetriebes und der Schaltwalze mit dem Servomotor mit größerer Toleranz erfolgen. Auch größere Neuteiltoleranzen von Schaltwalze und Servomotor können ermöglicht werden. Mit dem somit vorgestellten Verfahren kann auch mit größeren Neuteiltoleranzen und einer größeren Toleranz bei der Montage durch die Adaption ein Durchführen des Schaltvorgangs mit optimaler Schaltqualität erfolgen.

Gemäß einer weiteren Ausführungsform kann das Verfahren dadurch gekennzeichnet sein, dass das Verfahren mehrfach während eines Betriebs des Servomotors durchgeführt werden kann. Beispielsweise kann es nach der Montage und nach dem Ausliefern des das Mehrganggetriebe umfassenden Fahrrads mehrfach durchgeführt werden. Der Betrieb kann dabei ein Betrieb durch einen Fahrer des Fahrrads sein, beispielsweise während eines normalen Gebrauchs des Fahrrads.

Dadurch kann mit dem Verfahren das Durchführen von Schaltvorgängen über eine Lebensdauer des Mehrganggetriebes und der Schaltwalze mit dem Servomotor optimiert und adaptiert werden. Die Qualität der Schaltvorgänge kann damit gleichbleibend erhalten werden, auch wenn beispielsweise eine Degradation, wie beispielsweise eine mechanische Degradation der Schaltwalze, erfolgt. Somit ist eine zeitliche Stabilität der Qualität der verbauten Elemente, wie beispielsweise der Schaltwalze oder des Servomotors, nicht mehr so wichtig, denn eine Degradation über die Zeit kann über das Verfahren zur Adaption und zum Bestimmen des Steuerparameters zum Steuern des Servomotors ausgeglichen werden. So kann ein mechanischer Verschleiß an einem der Teile oder auch ein elektrischer Drift des Servomotors ausgeglichen werden.

Ein zweiter Aspekt der vorliegenden Erfindung betrifft eine Computereinrichtung. Die Computereinrichtung kann beispielsweise ein Steuergerät, wie ein Motorsteuergerät eines Fahrrads, wie eines E-Bikes, sein. Die Computereinrichtung kann eingerichtet sein, ein Verfahren nach einer Ausführungsform des ersten Aspekts der vorliegenden Erfindung zum Steuern eines Servomotors auszuführen.

Ein dritter Aspekt der vorliegenden Erfindung betrifft eine Antriebseinrichtung. Die Antriebseinrichtung kann einen Servomotor und eine Computereinrichtung nach einer Ausführungsform des zweiten Aspekts der vorliegenden Erfindung zum Steuern des Servomotors aufweisen. Die Antriebseinrichtung kann beispielsweise modular in ein Kraftfahrzeug, wie ein Fahrrad, beispielsweise ein E-Bike, eingebaut werden.

Ein vierter Aspekt der vorliegenden Erfindung betrifft ein Kraftfahrzeug, beispielsweise ein Zweirad, wie ein muskelkraftbetriebenes Zweirad oder ein Motorrad. Das muskelkraftbetriebene Zweirad kann beispielsweise ein Fahrrad, wie ein E-Bike, sein. Das Kraftfahrzeug kann eine Antriebseinrichtung nach einer Ausführungsform des dritten Aspekts der vorliegenden Erfindung aufweisen.
- Figur 1: zeigt schematisch Schritte eines Verfahrens zum Steuern eines Servomotors einer Schaltwalze eines Mehrganggetriebes.
- Figur 2: zeigt schematisch eine Computereinrichtung zum Ausführen eines in Figur 1 schematisch gezeigten Verfahrens, sowie eine Antriebseinrichtung mit einer solchen Computereinrichtung und ein Kraftfahrzeug mit einer solchen Antriebseinrichtung.

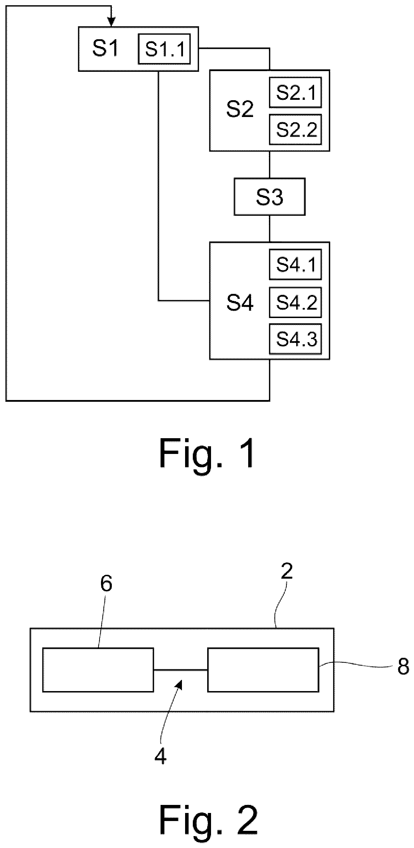

Figur 1 zeigt schematisch Schritte eines Verfahrens zum Steuern eines Servomotors 8 einer Schaltwalze eines Mehrganggetriebes.

Figur 2 zeigt schematisch den Servomotor 8, welcher kommunikativ mit einer Computereinrichtung 6 verbunden ist. Die Computereinrichtung 6 ist eingerichtet, Schritte des schematisch in Figur 1 gezeigten Verfahrens zum Steuern des Servomotors 8 auszuführen. Der Servomotor 8 und die Computereinrichtung 6 bilden zusammen eine Antriebseinrichtung 4. Dabei ist die Antriebseinrichtung 4 Teil eines Kraftfahrzeugs 2, hier eines E-Bikes.

Das Verfahren weist ein Durchführen S1 eines Schaltvorgangs im Mehrganggetriebe mit der Schaltwalze auf. Für das Durchführen S1 erfolgt ein Steuern des Servomotors 8 mit der Computereinrichtung 6. Ferner erfolgt ein Messen S2 einer Zeit, welche für das Durchführen S1 des Schaltvorgangs notwendig ist. Dafür erfolgt ein Bestimmen S2.1 einer Bewegung des Servomotors 8. Das Messen S2 der Zeit für das Durchführen S1 des Schaltvorgangs startet, wenn die bestimmte Bewegung des Servomotors 8 zum Durchführen S1 des Schaltvorgangs startet. Somit wird mit einem Sensor des Servomotors 8 gemessen, ob und wann eine Bewegung des Servomotors 8 startet. Der Sensor sendet Daten an die Computereinrichtung 6, welche das Bestimmen S2.1 der Bewegung des Servomotors 8 ausführt.

Ferner erfolgt ein Bestimmen S2.2 eines Drehmoments. Das Bestimmen S2.2 erfolgt mittels einem Messen des Drehmoments mit einem Drehmomentsensor am Servomotor 8. Das Messen S2 der Zeit für das Durchführen S1 des Schaltvorgangs endet, wenn ein vorbestimmtes Drehmoment bestimmt wird. Dabei wird das gemessene Drehmoment mit einem vorbestimmten Drehmoment verglichen. Wenn das gemessene Drehmoment innerhalb eines Toleranzbereichs um das vorbestimmte Drehmoment liegt, so wird bestimmt, dass das vorbestimmte Drehmoment bestimmt worden ist. Sodann wird bestimmt, dass das Durchführen S1 des Schaltvorgangs endet. Der Drehmomentsensor sendet Daten an die Computereinrichtung 6, welche das Bestimmen S2.2 des Drehmoments ausführt.

Dann erfolgt ein Vergleichen S3 der gemessenen Zeit mit einer vorbestimmten Zeit. Dabei wird eine vorbestimmte Zeit für einen bestimmten Schaltvorgang in einer als Zwischenspeicher eingerichteten Speichereinrichtung gespeichert und zum Vergleichen aus diesem Zwischenspeicher ausgelesen. Für unterschiedliche Schaltvorgänge zwischen unterschiedlichen Gängen sind unterschiedliche vorbestimmte Zeiten im Zwischenspeicher gespeichert.

Ferner erfolgt ein Bestimmen S4 eines Steuerparameters des Servomotors 8. Das Bestimmen S4 erfolgt in Abhängigkeit von dem Vergleich. Beim Bestimmen S4 des Steuerparameters erfolgt ein Bestimmen S4.1 eines Offsets für den Servomotor 8. Mit dem Offset wird der Servomotor 8 gegenüber einer Nullposition verdreht. Wird beispielsweise beim Vergleichen S3 bestimmt, dass die gemessene Zeit von der vorbestimmten Zeit um mindestens einen Toleranzbereich abweicht, so wird ein bestimmter Offset bestimmt. Das Bestimmen S4.1 erfolgt über eine Tabelle mit Einträgen zu gemessener und vorbestimmter Zeit und dazu passendem Offset. Der Offset wird auch gangspezifisch, also für einen bestimmten Schaltvorgang zwischen zwei bestimmten Gängen, bestimmt.

Ferner erfolgt beim Bestimmen S4 des Steuerparameters ein Bestimmen S4.2 einer Geschwindigkeit für den Servomotor 8. So wird für einen bestimmten Schaltvorgang eine erste Geschwindigkeit bestimmt und für einen bestimmten weiteren Schaltvorgang eine zweite Geschwindigkeit bestimmt. So wird beispielsweise für einen Schaltvorgang zwischen erstem und zweitem Gang des Mehrganggetriebes eine kleinere Geschwindigkeit bestimmt als für einen zweiten Schaltvorgang zwischen dem zweiten und einem dritten Gang des Mehrganggetriebes. Durch die unterschiedlichen Geschwindigkeiten kann der Servomotor 8 unterschiedlich schnell drehen, um das Durchführen S1 des Schaltvorgangs zu erreichen. Somit wird beispielsweise ein für einen Nutzer des Kraftfahrzeugs 2, wie einem Fahrer des E-Bikes, harmonischer und einheitlich gefühlter Schaltvorgang zwischen verschiedenen Gängen ermöglicht.

Ferner erfolgt beim Bestimmen S4 des Steuerparameters ein Bestimmen S4.3 eines Eingriffs zum Bremsen eines Elements des Servomotors 8 oder des Mehrganggetriebes. Der Eingriff zum Bremsen erfolgt über einen Motoreingriff am Servomotor 8. So wird beispielsweise über eine andere Bestromung des Servomotors 8 ein Eingriff zum Bremsen durchgeführt. Durch den Eingriff zum Bremsen greifen Elemente des Mehrganggetriebes schneller ineinander. Es erfolgt damit eine besonders harmonische Schaltung und ein besonders harmonischer Schaltvorgang zwischen Gängen des Mehrganggetriebes.

Das Bestimmen S4, und die Schritte des Bestimmens S4.1, S4.2 und S4.3 erfolgen für ein zeitlich nachfolgendes Durchführen S1 eines Schaltvorgangs mit dem bestimmten Steuerparameter. So erfolgt ein zeitlich nachfolgendes Durchführen S1 des Schaltvorgangs mit dem bestimmten Offset, der bestimmten Geschwindigkeit und dem bestimmten Eingriff zum Bremsen.

Ferner erfolgt ein Messen S1.1 eines Winkels des Servomotors 8. Dies erfolgt beim Durchführen S1 des Schaltvorgangs. Somit wird mit einem Winkelsensor des Servomotors 8 ein absoluter oder auch ein relativer Winkel des Servomotors 8 bestimmt. Somit liegt Information vor, zu welcher Zeit und um welchen Winkel der Servomotor 8 und damit die Schaltwalze, welche mit dem Servomotor 8 mechanisch in Eingriff ist und in direkter mechanischer Wirkverbindung ist, gedreht wird. Das Bestimmen S4 des Steuerparameters des Servomotors 8 erfolgt in Abhängigkeit des gemessenen Winkels. Somit wird validiert und verifiziert, dass beim Durchführen S1 eines Schaltvorgangs auch wirklich der Servomotor 8 und damit die Schaltwalze gedreht wird. Somit wird ein fehlerhaftes Ausführen des Verfahrens aufgrund eines ungenügenden Drehens von Servomotor 8 und Schaltwalze verhindert.

In einer Ausführungsform erfolgt das Durchführen S1 mehrerer Schaltvorgänge. So wird beispielsweise zunächst ein Schaltvorgang zwischen erstem und zweitem Gang und dann ein Schaltvorgang zwischen dem zweiten und dritten Gang durchgeführt. Ferner erfolgt ein Messen S2 einer Zeit für das Durchführen S1 der einzelnen Schaltvorgänge.

So wird eine erste Zeit für das Durchführen S1 des ersten Schaltvorgangs und eine zweite, andere Zeit für das Durchführen S1 des zweiten Schaltvorgangs gemessen. Ferner erfolgt ein Vergleichen S3 der gemessenen Zeit mit vorbestimmten Zeiten. Diese vorbestimmten Zeiten sind gangspezifisch. Somit wird für den ersten Schaltvorgang eine erste vorbestimmte Zeit verwendet zum Vergleichen S3, und für den zweiten Schaltvorgang eine zweite vorbestimmte Zeit, welche unterschiedlich zur ersten vorbestimmten Zeit ist. Ferner erfolgt das Bestimmen S4 des Steuerparameters in Abhängigkeit von mehreren Vergleichen S3. Somit wird das Verfahren zum Steuern des Servomotors 8 so verwendet, dass mehrere Schaltvorgänge sich im Bestimmen S4 des Steuerparameter widerspiegeln. Somit wird ein harmonischerer Schaltvorgang zwischen mehreren Gängen, und nicht nur zwischen zwei Gängen, bereitgestellt.

Ferner erfolgt das Durchführen von Schritten des Verfahrens im Rahmen eines erstmaligen Betriebs der Schaltwalze nach einer Montage der Schaltwalze im Mehrganggetriebe. Somit werden Neuteiltoleranzen der Schaltwalze und des Servomotors 8 ausgeglichen. Ferner werden Schritte des Verfahrens mehrfach während des Betriebs und nach Montage von Schaltwalze und Servomotor 8 durchgeführt. Somit wird auch ein Verschleiß von Elementen, wie des Servomotors 8 oder der Schaltwalze im Mehrganggetriebe, ausgeglichen.

### Bezugszeichen

- 2: Kraftfahrzeug
- 4: Antriebseinrichtung
- 6: Computereinrichtung
- 8: Servomotor
- S1: Durchführen eines Schaltvorgangs im Mehrganggetriebe
- S1.1: Messen eines Winkels des Servomotors
- S2: Messen einer Zeit für das Durchführen des Schaltvorgangs
- S2.1: Bestimmen einer Bewegung des Servomotors
- S2.2: Bestimmen eines Drehmoments
- S3: Vergleichen der gemessenen Zeit mit einer vorbestimmten Zeit
- S4: Bestimmen eines Steuerparameters des Servomotors
- S4.1: Bestimmen eines Offsets für den Servomotor
- S4.2: Bestimmen einer Geschwindigkeit für den Servomotor
- S4.3: Bestimmen eines Eingriffs zum Bremsen eines Elements des Servomotors oder des Mehrganggetriebes

## Patentansprüche

1. Verfahren zum Steuern eines Servomotors (8) einer Schaltwalze eines Mehrganggetriebes, mit den Schritten: Durchführen (S1) eines Schaltvorgangs im Mehrganggetriebe mit der Schaltwalze; Messen (S2) einer Zeit, welche für das Durchführen (S1) des Schaltvorgangs notwendig ist; Vergleichen (S3) der gemessenen Zeit mit einer vorbestimmten Zeit, und Bestimmen (S4) eines Steuerparameters des Servomotors (8) in Abhängigkeit von dem Vergleich für ein zeitlich nachfolgendes Durchführen (S1) eines Schaltvorgangs mit dem bestimmten Steuerparameter.

2. Verfahren nach Anspruch 1, **dadurch gekennzeichnet, dass** ferner ein Bestimmen (S2.1) einer Bewegung des Servomotors (8) erfolgt, und das Messen (S2) der Zeit für das Durchführen (S1) des Schaltvorgangs startet, wenn die bestimmte Bewegung des Servomotors (8) zum Durchführen (S1) des Schaltvorgangs startet.

3. Verfahren nach einem der vorhergehenden Ansprüche, **dadurch gekennzeichnet, dass** ferner ein Bestimmen (S2.2) eines Drehmoments erfolgt, und das Messen (S2) der Zeit für das Durchführen (S1) des Schaltvorgangs endet, wenn ein vorbestimmtes Drehmoment bestimmt wird.

4. Verfahren nach einem der vorhergehenden Ansprüche, **dadurch gekennzeichnet, dass** ein Durchführen (S1) mehrerer Schaltvorgänge erfolgt, ein Messen (S2) einer Zeit für das Durchführen (S1) der einzelnen Schaltvorgänge erfolgt, ein Vergleichen (S3) der gemessenen Zeiten mit vorbestimmten Zeiten erfolgt, und das Bestimmen (S4) des Steuerparameters in Abhängigkeit von mehreren Vergleichen erfolgt.

5. Verfahren nach einem der vorhergehenden Ansprüche, **dadurch gekennzeichnet, dass** beim Bestimmen (S4) des Steuerparameters ein Bestimmen (S4.1) eines Offsets für den Servomotor (8) erfolgt.

6. Verfahren nach einem der vorhergehenden Ansprüche, **dadurch gekennzeichnet, dass** beim Bestimmen (S4) des Steuerparameters ein Bestimmen (S4.2) einer Geschwindigkeit für den Servomotor (8) erfolgt.

7. Verfahren nach einem der vorhergehenden Ansprüche, **dadurch gekennzeichnet, dass** beim Bestimmen (S4) des Steuerparameters ein Bestimmen (S4.3) eines Eingriffs zum Bremsen eines Elements des Servomotors (8) oder des Mehrganggetriebes erfolgt.

8. Verfahren nach einem der vorhergehenden Ansprüche, **dadurch gekennzeichnet, dass** ein Messen (S1.1) eines Winkels des Servomotors (8) beim Durchführen (S1) des Schaltvorgangs erfolgt, und das Bestimmen (S4) des Steuerparameters des Servomotors (8) in Abhängigkeit des gemessenen Winkels erfolgt.

9. Verfahren nach einem der vorhergehenden Ansprüche, **dadurch gekennzeichnet, dass** das Verfahren im Rahmen eines erstmaligen Betriebs der Schaltwalze nach einer Montage der Schaltwalze in dem Mehrganggetriebe durchgeführt wird.

10. Verfahren nach einem der vorhergehenden Ansprüche, **dadurch gekennzeichnet, dass** das Verfahren mehrfach während eines Betriebs des Servomotors (8) durchgeführt wird.

11. Computereinrichtung (6), welche eingerichtet ist, ein Verfahren nach einem der vorhergehenden Ansprüche zum Steuern eines Servomotors (8) auszuführen.

12. Antriebseinrichtung (4), welche einen Servomotor (8) und eine Computereinrichtung (6) nach dem vorhergehenden Anspruch zum Steuern des Servomotors (8) aufweist.

13. Kraftfahrzeug (2), welches eine Antriebseinrichtung (4) nach dem vorhergehenden Anspruch aufweist.
